# EUROPÄISCHE PATENTANMELDUNG

(11) **EP 3 499 803 A1**
(43) Veröffentlichungstag der Anmeldung: **19.06.2019**
(21) Anmeldenummer: 19151509.7
(22) Anmeldetag: 20.06.2007
(51) Int. Cl.: H04L 12/24

(54) **ELEKTRONISCHES GERÄT, INSBESONDERE ETHERNET-SWITCH, MIT MITTELN ZUR ZUVERLÄSSIGEN FERNWARTUNG**

(30) Priorität: 23.06.2006 DE 102006029343
(62) Teilanmeldung aus: 07764748.5
(71) Anmelder: Hirschmann Automation and Control GmbH, 72654 Neckartenzlingen (DE)
(72) Erfinder: Mohl, Dirk, 73733 Esslingen (DE)
(74) Vertreter: Greif, Thomas

(57) **Zusammenfassung**

Die Erfindung betrifft ein elektronisches Gerät mit zumindest einer Steuereinheit und zumindest einer Speichereinheit sowie ein dementsprechendes Verfahren, wobei das Gerät ein Betriebssystem mit einer Software in einer bestimmten Konfiguration zum Betrieb des Gerätes aufweist, wobei erfindungsgemäß vorgesehen ist, dass das Gerät eine Schnittstelle aufweist, an der Mittel zur Fernwartung des Gerätes angeschlossen sind und dass das Gerät einen Timer aufweist, wobei der Timer bei einer Konfigurationsänderung zu laufen beginnt und erst dann stoppt, sobald eine geänderte Konfiguration in die Speichereinheit fehlerfrei geladen worden ist und dann das Gerät mit der geänderten und fehlerfrei abgespeicherten Konfiguration betrieben wird.

## Beschreibung

Die Erfindung betrifft ein elektronisches Gerät mit zumindest einer Steuereinheit und zumindest einer Speichereinheit, wobei das Gerät ein Betriebssystem mit einer Software in einer bestimmten Konfiguration zum Betrieb des Gerätes aufweist, gemäß den Merkmalen des Oberbegriffes des Patentanspruches 1.

Bei der Erfindung handelt es sich um bekannte elektronische Geräte (Hardware) mit einem Betriebssystem, welches Software in einer bestimmten Konfiguration zum Betrieb des Gerätes enthält. Insbesondere betrifft die Erfindung Switche, vorzugsweise Ethernet-Switche, in besonderen Umgebungsbedingungen, wie zum Beispiel auf dem Meer, in Minen, in Tunneln, in Produktionshallen oder dergleichen.

Werden gemäß dem bekannten Ist-Zustand auf einem solchen elektronischen Gerät Konfigurationen der Software durch eine Bedienperson (zum Beispiel den Administrator) durchgeführt, dann werden diese Konfigurationen (zum Beispiel ein Update einer Software oder auch eine vollständig neue Software, die die bisher abgespeicherte Software ersetzt) immer sofort aktiv. Eine Konfigurationsänderung wird immer erst in einer Speichereinheit, vorzugsweise einem flüchtigen Arbeitsspeicher, durchgeführt. Dabei wird die neue Konfiguration lokal (also am Einbauort des Gerätes) in dessen Speichereinheit gespeichert, wobei alle Konfigurationsinformationen in die Speichereinheit, zum Beispiel in den lokalen, nicht flüchtigen Speicher (Flash-Speicher) übertragen werden.

Geräte, insbesondere Ethernet-Switche, für besondere Umgebungsbedingungen werden allerdings oft an Stellen (Einbauorten) installiert und betrieben, die nur sehr schwer oder sehr aufwändig zugänglich sind. Daher ist es schon grundsätzlich bekannt geworden, dass das Gerät aus der Ferne von einer Steuerzentrale aus, an die das Gerät angeschlossen ist, konfiguriert werden kann.

Bei dieser Art der Konfiguration kann es aber auch vorkommen, dass das Gerät durch einen Fehler, insbesondere einen Konfigurationsfehler oder einen Fehler bei der Datenübertragung, nicht mehr erreichbar ist. Das heißt, dass beim Stand der Technik die an sich funktionierende Konfiguration in einer bestimmten Version (gegebenenfalls auch Erstversion) bei der Änderung der Konfiguration ersetzt wird, so dass auf Grund der ersetzenden Neu-Konfiguration die bisher bestehende und fehlerfrei arbeitende Konfiguration nicht mehr einsetzbar ist, weil davon ausgegangen wird, dass diese durch eine fehlerfreie Installation der neuen Konfiguration ersetzt wird und danach das Gerät wieder betriebsbereit mit der neuen Konfiguration ist. Diese bekannte Konfigurationsänderung hat aber, wie schon beschrieben, den Nachteil, dass das Gerät insbesondere dann, wenn die neue Konfiguration nicht richtig installiert wurde oder bei der Datenübertragung Fehler aufgetaucht sind, nicht mehr weiter betrieben werden kann, da mit Beginn der Neu-Konfiguration die bisher auf dem Gerät laufende Software zum Beispiel zumindest teilweise oder sogar vollständig gelöscht wurde. Für einen solchen Fall haben elektronische Geräte zwar einen so genannten Reset-Knopf (oder andere Möglichkeiten, um einen Neustart zu ermöglichen), wobei es aber erforderlich ist, dass das Gerät nur noch vor Ort aus dem nicht mehr betriebsbereiten Zustand befreit werden kann. Je nach Einbauort ist dies allerdings nur mit einem sehr hohen Aufwand möglich, zum Beispiel dann, wenn bei Offshore-Windkraftanlagen elektronische Geräte eingesetzt werden, die den Betrieb dieser Windkraftanlage steuern bzw. regeln. Dann ist es erforderlich, eine solche Offshore-Windkraftanlage mit einem Schiff oder einem Helikopter anzusteuern, was allerdings einen hohen Zeit- und Kostenaufwand bedeutet.

Daneben ist es bekannt, in Produktionshallen oder verfahrenstechnischen Anlagen zur Steuerung der dortigen Prozesse Netzwerke einzusetzen, wobei in diesem Netzwerk als elektronisches Gerät Switche oder dergleichen zur Steuerung des Daten- und Informationsflusses eingesetzt werden. Auch hier bedeutet der Ausfall eines elektronischen Gerätes, insbesondere bei zeitkritischen produktions- oder verfahrenstechnischen Abläufen, einen hohen Aufwand, bis eine Bedienperson an den Einbauort des Gerätes gelangt ist und dort einen Neustart durchführen kann.

Der Erfindung liegt daher die Aufgabe zu Grunde, ein elektronisches Gerät bereit zu stellen, bei dem eine Konfigurationsänderung aus der Ferne problemlos und zuverlässig durchgeführt werden kann und mit dem die eingangs geschilderten Nachteile vermieden werden.

Diese Aufgabe ist durch die Merkmale des Patentanspruches 1 gelöst.

Erfindungsgemäß ist vorgesehen, dass das Gerät eine Schnittstelle aufweist, an der Mittel zur Fernwartung des Gerätes angeschlossen sind, und dass das Gerät einen Timer aufweist, wobei der Timer bei einer Konfigurationsänderung zu laufen beginnt und erst dann stoppt, sobald eine geänderte Konfiguration in die Speichereinheit fehlerfrei geladen worden ist und dann das Gerät mit der geänderten und fehlerfrei in der Speichereinheit abgespeicherten Konfiguration betrieben wird.

Grundvoraussetzung für die Realisierung eines solchen elektronischen Gerätes ist eine Schnittstelle, über die das Gerät drahtgebunden oder drahtlos in Distanz zu einer Steuerzentrale angeschlossen ist. Damit wird es grundsätzlich möglich, dass zwecks Konfigurationsänderung die Bedienperson (zum Beispiel der Administrator oder ein Servicetechniker) sich nicht mehr am Einbauort des elektronischen Gerätes befinden muss, sondern die Konfigurationsänderung aus der Distanz (zum Beispiel einige hundert Meter, aber auch über Distanzen von Kilometern hinweg), vorzugsweise von einer Steuerzentrale aus, durchführen kann. Eine solche Steuerzentrale kann zum Beispiel bei einer Produktionshalle oder bei verfahrenstechnischen Prozessen ein Leitstand sein, wobei aber auch beispielsweise ein Laptop mit einer Funkverbindung zu dem elektronischen Gerät als Steuerzentrale denkbar ist.

Die erfindungsgemäßen Geräte (insbesondere die Switche) haben für diese Art von Anwendung eine Sonderfunktion, die mit entsprechenden Mitteln realisiert ist. Ist diese aktiviert, dann läuft folgendes Verfahren ab und das Gerät (der Switch) verhält sich wie folgt:
Sobald eine beliebige Konfigurationsänderung (Erst-Konfiguration oder zum Beispiel Update) im Rahmen einer Fernwartung am Gerät durchgeführt wurde, startet ein im Gerät vorhandener Timer, zum Beispiel für eine Zeitdauer von 30 Minuten. Diese Zeitdauer kann auch größer oder kleiner als 30 Minuten sein. Die Zeitdauer kann vorzugsweise auch über Fernwartung veränderbar sein. Sie richtet sich vorzugsweise nach der erwarteten Dauer für die Übertragung und Speicherung der Konfigurationsdaten. Bei jeder weiteren Konfigurationsänderung (das heißt Datenfluss zu dem Gerät, der die Konfigurationsdaten enthält) beginnt der Timer wieder von neuem zu laufen. Somit läuft der Timer nicht ab, solange Konfigurationsänderungen durchgeführt werden. Der Timer stoppt, sobald die aktuelle Konfiguration (Konfigurationsdaten) lokal in der Speichereinheit des Gerätes gespeichert wurde und startet wieder, sobald eine weitere Konfigurationsänderung durchgeführt wird. Der Ablauf des Timers kann auch dadurch verhindert werden, dass eine Kommunikation zwischen entferntem Gerät (Switch) und Konfigurationsoberfläche besteht. Läuft der Timer ab, nachdem die Konfigurationsdaten fehlerfrei übertragen und geladen worden sind, dann wird diese gespeicherte und fehlerfreie Konfiguration geladen. Diese erfindungsgemäße Funktion ermöglicht es nun, dass das Gerät bei einer Fehlkonfiguration nach Ablauf des Timer wieder zu erreichen ist. Das ist damit sichergestellt, da die zuletzt gespeicherte Konfiguration entweder die Defaultkonfiguration ist oder eine Konfiguration, bei welcher eine funktionierende Kommunikation möglich war (zum Beispiel zum Auslösen Speichervorgangs).

Die Erfindung betrifft somit ein elektronisches Gerät, insbesondere einen Ethernet-Switch, sowie ein dementsprechendes Verfahren für besondere Umgebungsbedingungen, zumindest mit einer Speichereinheit zur Speicherung einer Betriebssoftware mit einer jeweils aktuellen Konfiguration sowie Mitteln zur Fernwartung des Gerätes zumindest zum Übertragen und zum Abspeichern einer neuen Konfiguration (bzw. deren Konfigurationsdaten), wobei das Gerät die Funktion und zugehörige Mittel aufweist, im Falle einer Fehlfunktion während der Fernwartung, die zu einer Nichterreichbarkeit des Gerätes führt, nach Ablauf einer bestimmten Zeit mit der vorherigen (der jeweils aktuellen) Konfiguration weiterzuarbeiten, falls die beabsichtigte Neu-Konfiguration, egal aus welchen Gründen, fehlgeschlagen ist.

## Patentansprüche

1. Elektronisches Gerät mit zumindest einer Steuereinheit und zumindest einer Speichereinheit, wobei das Gerät ein Betriebssystem mit einer Software in einer bestimmten Konfiguration zum Betrieb des Gerätes aufweist, **dadurch gekennzeichnet, dass** das Gerät ein Ethernet-Switch ist, der eine Schnittstelle aufweist, an der Mittel zur Fernwartung des Ethernet-Switches angeschlossen sind und dass der Ethernet-Switch einen Timer aufweist, wobei der Timer bei einer Konfigurationsänderung zu laufen beginnt und erst dann stoppt, sobald eine geänderte Konfiguration in die Speichereinheit fehlerfrei geladen worden ist und dann der Ethernet-Switch mit der geänderten und fehlerfrei abgespeicherten Konfiguration betrieben wird.

2. Elektronisches Gerät nach Anspruch 1, **dadurch gekennzeichnet, dass** die Mittel zur Fernwartung eine Steuerzentrale sind, wobei das Gerät in Distanz zu der Steuerzentrale über Kabel mit der Steuerzentrale verbunden ist.

3. Elektronisches Gerät nach Anspruch 1 oder 2, **dadurch gekennzeichnet, dass** die Mittel zur Fernwartung eine Steuerzentrale sind, wobei das Gerät in Distanz zu der Steuerzentrale drahtlos mit der Steuerzentrale verbunden ist.

4. Elektronisches Gerät nach Anspruch 3, **dadurch gekennzeichnet, dass** die drahtlose Verbindung eine Funk- oder Infrarot-Verbindung ist.

5. Elektronisches Gerät nach einem der vorhergehenden Ansprüche, **dadurch gekennzeichnet, dass** das Gerät in einem Netzwerk, insbesondere in einem Ethernet-Netzwerk, angeordnet ist.
